# FASCICULE DE BREVET EUROPEEN

(11) **EP 2 527 750 B1**
(45) Date de publication et mention de la délivrance du brevet: **24.12.2014**
(21) Numéro de dépôt: 12305542.8
(22) Date de dépôt: 15.05.2012
(51) Int. Cl.: F24D 3/08, F24D 17/02, F24D 19/10, F24D 12/02

(54) **Chaudière thermodynamique**
thermodynamischer wassererhitzer
thermodynamic water heater

(30) Priorité: 17.05.2011 FR 1154258
(43) Date de publication de la demande: 28.11.2012
(73) Titulaire: Hildenbrand, Bernard, 1912 Luxembourg (LU)
(72) Inventeur: Hildenbrand, Bernard, 1912 Luxembourg (LU)
(74) Mandataire: Poupon, Michel

(56) Documents cités:
- EP-A1- 1 507 122
- DE-A1- 10 114 160
- GB-A- 2 461 365

## Description

### Domaine technique et état de l'art

L'invention concerne une chaudière thermodynamique apte à chauffer l'air ambiant et à produire de l'eau chaude sanitaire pour un bâtiment tel qu'une maison, un immeuble résidentiel, un local professionnel, etc. L'invention concerne également une installation de chauffage intégrant une telle chaudière thermodynamique.

Les chaudières thermodynamiques existantes sont adaptées pour chauffer l'air ambiant d'un bâtiment, en chauffant l'eau circulant dans un circuit de chauffage. Les chauffe-eau thermodynamiques commercialisés aujourd'hui comprennent généralement un réservoir à eau sanitaire et une pompe à chaleur de type air/eau adaptée à chauffer l'eau sanitaire du réservoir à partir de l'air ambiant. Ils sont généralement installés à l'intérieur d'un local, et non à l'extérieur d'un bâtiment. On évite ainsi la nécessité d'utiliser une pompe à chaleur adaptée à travailler à basse ou très basse température, notamment l'hiver, et qui est nécessairement onéreuse. Mais pour chauffer l'eau du réservoir d'eau chaude sanitaire, la pompe à chaleur capte l'énergie, la chaleur de l'air ambiant ; ceci peut être intéressant, en été par exemple, mais est très pénalisant en hiver où on cherche au contraire à chauffer l'air ambiant.

Le document EP 1 507 122 montre le préambule de la revendication.

### Description de l'invention

L'invention concerne une chaudière comprenant un dispositif de chauffage adapté pour produire un fluide chaud de chauffage sur une sortie de la chaudière ; la dite sortie de la chaudière est adaptée à être reliée à une entrée d'un circuit de chauffage comprenant au moins un dispositif échangeur de chaleur tel qu'un radiateur ou un plancher chauffant. La chaudière selon l'invention est **caractérisée en ce qu'**elle comprend également une pompe à chaleur de type liquide / fluide, comprenant :
- un circuit primaire dont une sortie est reliée à une entrée de fluide du dispositif de chauffage et dont une entrée forme une entrée de fluide de la chaudière ; la dite entrée de fluide de la chaudière est adaptée à être reliée à une sortie du circuit de chauffage, et
- un circuit secondaire dont une sortie et une entrée de fluide sont adaptées à être reliées respectivement à une entrée et une sortie de fluide d'un ballon d'eau chaude sanitaire ; le circuit primaire et le circuit secondaire sont couplés thermiquement de sorte que le circuit primaire transmette de l'énergie au circuit secondaire.

La chaudière selon l'invention produit l'eau chaude de chauffage et un fluide pour chauffer l'eau chaude sanitaire, à des températures qui peuvent être différentes. La chaudière est adaptée à être reliée au circuit de chauffage comprenant le ou les dispositifs échangeurs de chaleur du bâtiment, tels que les radiateurs, les planchers chauffants, les ventiloconvecteurs, etc.

La particularité de l'invention est que le circuit primaire de la pompe à chaleur est relié entre l'entrée de la chaudière et l'entrée du dispositif de chauffage, c'est-à-dire à la fin du circuit de retour du circuit de chauffage comprenant les dispositifs émetteurs de chauffage du bâtiment, tels que les radiateurs, les planchers chauffants, etc. Ainsi la source froide de la pompe à chaleur destinée au chauffage de l'eau sanitaire est le circuit de chauffage de l'air du bâtiment. En hiver, l'eau circulant dans le circuit de chauffage est chauffée par le dispositif de chauffage (la chaudière), utilisée par le circuit de chauffage (radiateurs, etc.) pour chauffer le bâtiment, puis est utilisée par la pompe à chaleur pour produire l'eau chaude sanitaire à faible coût, sans perturber le chauffage de l'air du bâtiment puisque le circuit primaire est juste à l'entrée de la chaudière. En été, l'eau circulant dans le circuit de chauffage n'est pas chauffée par le dispositif de chauffage et est à la température de l'air ambiant. Ainsi, la pompe à chaleur puise de l'énergie gratuite dans l'eau circulant dans le circuit de chauffage (les radiateurs, etc.), et pour chauffer l'eau sanitaire du réservoir ; l'eau circulant dans le circuit de chauffage est ainsi refroidie, ce qui refroidit l'air ambiant du bâtiment, qui est ainsi climatisé.

Selon une variante, la chaudière selon l'invention comprend également un réservoir d'eau sanitaire, la sortie et l'entrée de fluide du circuit secondaires étant reliées respectivement à l'entrée et la sortie de fluide du réservoir d'eau chaude sanitaire de sorte à transmettre l'énergie du fluide circulant dans le circuit secondaire à l'eau sanitaire du réservoir. Le réservoir d'eau sanitaire est ainsi totalement intégré à la chaudière. Il n'y a ainsi aucune déperdition de chaleur entre la pompe à chaleur et le réservoir d'eau sanitaire. De plus, la chaudière ainsi réalisée est compacte autonome, et son installation dans un bâtiment est simplifié à l'extrême : il suffit simplement de relier le circuit de chauffage et le réseau de distribution de l'eau chaude sanitaire aux entrées / sorties appropriées de la chaudière.

De préférence, la pompe à chaleur comprend également des moyens pour extraire de l'énergie du liquide circulant dans le circuit primaire et transmettre l'énergie extraite au fluide circulant dans le circuit secondaire. Ceci permet un transfert de chaleur plus efficace.

Selon une variante, les moyens d'extraction comprennent :
- un circuit de fluide amont adapté pour que le fluide circulant dans le circuit primaire échange de l'énergie avec le fluide circulant dans le circuit amont, le circuit primaire et le circuit amont formant ensemble un évaporateur
- un compresseur adapté à comprimer le fluide du circuit amont,
- un circuit de fluide aval adapté pour que le fluide comprimé échange de l'énergie avec le fluide circulant dans le circuit secondaire, le circuit aval et le circuit secondaire formant ensemble un condenseur,
- un détendeur pour détendre le fluide reçu du circuit aval et transmettre le fluide détendu au circuit amont.

Selon une autre variante, les moyens d'extraction comprennent :
- un circuit de fluide amont adapté pour que le fluide circulant dans le circuit primaire échange de l'énergie avec le fluide circulant dans le circuit amont,
- un compresseur adapté à comprimer le fluide du circuit amont et à fournir le fluide comprimé au circuit secondaire de la pompe à chaleur,
- un détendeur pour détendre le fluide reçu du circuit secondaire et transmettre le fluide détendu au circuit amont.

Egalement, la chaudière peut comprendre une vanne trois voies dont :
- une première entrée est reliée à la sortie du circuit primaire de la pompe à chaleur,
- une deuxième entrée est reliée à la sortie du dispositif de chauffage,
- une sortie forme la sortie de la chaudière.

La vanne trois voies permet au choix :
- soit de relier en série le dispositif de chauffage chauffant l'eau de chauffage, le circuit de chauffage distribuant la chaleur et le circuit primaire de la pompe à chaleur destinée au chauffage de l'eau sanitaire, ou
- soit de relier en série le circuit de chauffage distribuant la chaleur et le circuit primaire de la pompe à chaleur destinée au chauffage de l'eau sanitaire, le dispositif chauffant l'eau de chauffage étant ainsi isolé ; ceci est particulièrement intéressant lorsqu'il n'est pas nécessaire de chauffer l'air ambiant du bâtiment.

On peut encore prévoir un moyen de commande de la vanne trois voies pour, en fonction d'une valeur prédéfinie d'un paramètre de sélection telle qu'une température ambiante ou une instruction d'un utilisateur, relier sélectivement:
- la sortie du dispositif de chauffage à l'entrée du circuit de chauffage, ou
- la sortie du circuit primaire à l'entrée du circuit de chauffage.

La commande de la vanne trois voies est ainsi automatisée.

Le dispositif de chauffage peut comprendre quant à lui un réservoir d'eau de chauffage dont une entrée et une sortie forment respectivement l'entrée et la sortie du dispositif de chauffage, et un élément chauffant pour chauffer le liquide du réservoir d'eau de chauffage, ledit élément chauffant étant :
- une pompe à chaleur apte à produire de l'énergie à partir de l'eau, de l'air, d'un sol, ou
- un bruleur apte à produire de l'énergie à partir de bois, de charbon, de fuel, etc., ou
- une combinaison d'un bruleur et d'une pompe à chaleur.

Tous les éléments de la chaudière, dispositif de chauffage et pompe à chaleur pour le chauffage de l'eau chaude sanitaire, sont positionnés de préférence dans un même boîtier.

### Brève description des figures

L'invention sera mieux comprise, et d'autres caractéristiques et avantages de l'invention apparaîtront à la lumière de la description qui suit d'un exemple de réalisation d'une pompe à chaleur selon l'invention. Cet exemple est donné à titre non limitatif. La description est à lire en relation avec les dessins annexés dans lesquels
- la figure 1 est un schéma d'un mode de réalisation d'une installation de chauffage comprenant une chaudière selon l'invention
- la figure 2 est un schéma d'un deuxième mode de réalisation d'une chaudière selon l'invention
- la figure 3 est un schéma d'un autre mode de réalisation d'un élément d'une chaudière selon l'invention.

### Description de modes de réalisation de l'invention

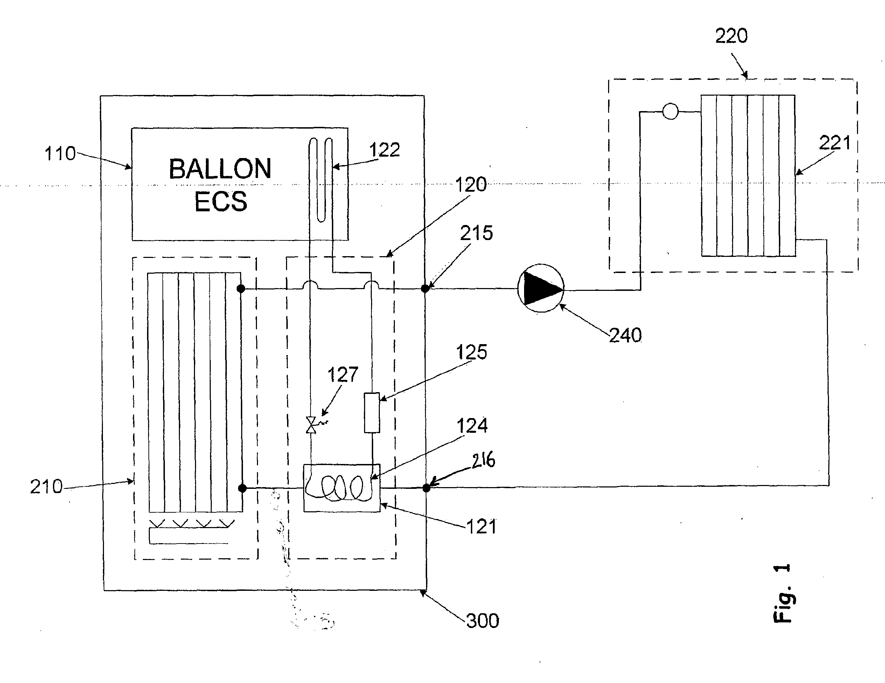

La figure 1 montre une installation de chauffage comprenant une chaudière 300 selon l'invention, installée par exemple dans un bâtiment à chauffer.

La chaudière 300 comprend un dispositif de chauffage 210 adapté pour produire un fluide chaud de chauffage sur une sortie 215 de la chaudière ; la sortie 215 est reliée à une entrée d'un circuit de chauffage 220 comprenant au moins un dispositif émetteur 221 de chaleur tel qu'un radiateur ou un plancher chauffant. La chaudière selon l'invention comprend également une pompe à chaleur 120 de type liquide / fluide, comprenant :
- un circuit primaire 121 dont une sortie est reliée à une entrée de fluide du dispositif de chauffage 210 et dont une entrée forme une entrée 216 de fluide de la chaudière reliée à une sortie de retour du circuit de chauffage 220, et
- un circuit secondaire 122 dont une sortie et une entrée de fluide sont reliées respectivement à une entrée EC et une sortie EF de fluide d'un réservoir 110 d'eau chaude sanitaire ; le circuit primaire 121 et le circuit secondaire 122 sont couplés thermiquement de sorte que le circuit primaire transmette de l'énergie au circuit secondaire.

Dans les exemples représentés, la pompe à chaleur comprend également des moyens 123 pour extraire de l'énergie du liquide circulant dans le circuit primaire et transmettre l'énergie extraite au fluide circulant dans le circuit secondaire.

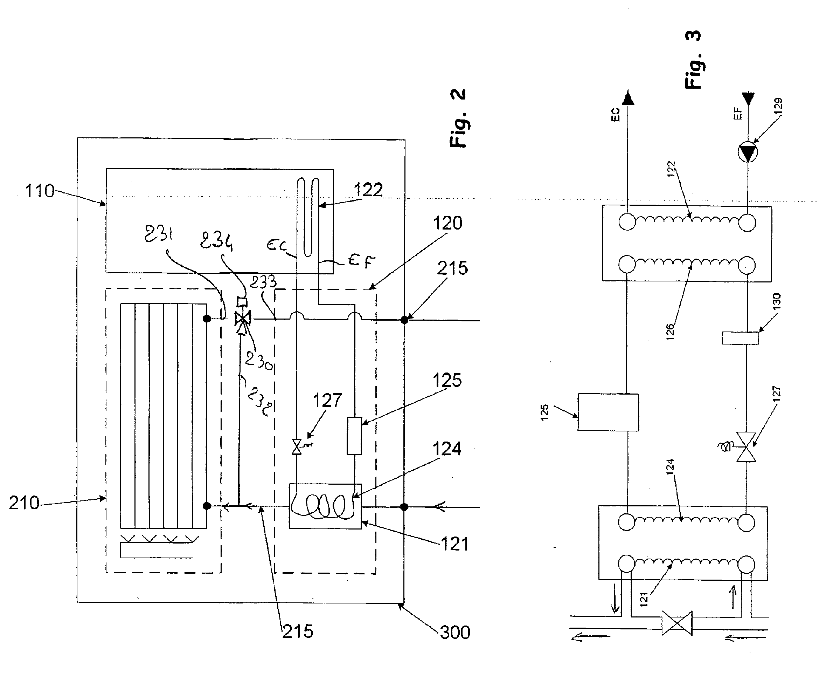

Un mode de réalisation de la pompe à chaleur 120 de la chaudière selon l'invention est représenté sur la figure 3. Le circuit primaire 121 est raccordé sur le retour du circuit de chauffage 210, entre l'entrée de la chaudière et l'entrée du dispositif de chauffage 210. Le circuit secondaire 122 est relié à l'entrée EC et à la sortie EF du réservoir 110 (non représenté sur la figure 3). Dans l'exemple de la figure 3, l'eau du réservoir 110 circule directement dans le circuit secondaire. Dans une variante, le circuit secondaire est un échangeur de chaleur positionné au plus près de l'eau à chauffer du réservoir 110, soit à l'intérieur du réservoir 110 (un tuyau serpentant à l'intérieur du réservoir par exemple) soit à l'extérieur du réservoir (un tube enroulé autour du réservoir 110 par exemple). Dans l'exemple de la figure 3, un circulateur 129 est inséré en série avec le circuit secondaire 122, pour entraîner en mouvement le fluide circulant dans le circuit secondaire.

Les moyens d'extraction 123 de chaleur de la pompe à chaleur sont adaptés à extraire de l'énergie du liquide circulant dans le circuit primaire et à transmettre l'énergie extraite au fluide circulant dans le circuit secondaire. Les moyens 123 comprennent un circuit de fluide amont 124, un compresseur 125, un circuit de fluide aval 126 et un détendeur 127, relié ensemble en série pour former une boucle fermée dans laquelle circule un fluide d'extraction, tel que de l'eau ou tout autre fluide frigorigène. Le circuit de fluide amont 124 est adapté pour que le fluide circulant dans le circuit primaire échange de l'énergie avec le fluide circulant dans le circuit amont. Le circuit primaire et le circuit amont forment ensemble un évaporateur. Dans la pratique, un évaporateur à plaque peut être utilisé. Le compresseur 125 est adapté à comprimer le fluide qu'il reçoit du circuit amont. Le circuit de fluide aval 126 est adapté pour que le fluide comprimé qu'il reçoit du compresseur échange de l'énergie avec le fluide circulant dans le circuit secondaire. Le circuit aval et le circuit secondaire forment ensemble un condenseur de fluide. Dans la pratique, un condenseur à plaque peut être utilisé. Le détendeur 127 est adapté à détendre le fluide reçu du circuit aval et transmettre le fluide détendu au circuit amont. Dans l'exemple représenté, les moyens d'extraction 123 comprennent égalent un réservoir 130 de fluide d'extraction, pour compenser d'éventuelles pertes de fluide en cours d'utilisation.

Le fonctionnement de la pompe à chaleur est classique. Le fluide circulant dans le circuit primaire 121 échange de la chaleur avec le fluide circulant dans le circuit amont 124. Le compresseur comprime le fluide reçu du circuit amont 124 et le transmet au circuit aval 126. Le fluide circulant dans le circuit aval 126 échange de l'énergie avec le fluide circulant dans le circuit secondaire 122. Enfin, le fluide circulant dans le circuit secondaire 122 chauffe l'eau contenue dans le réservoir 110 d'eau sanitaire de la chaudière.

A noter que le circuit secondaire 122 de la pompe à chaleur 120 peut aussi être relié à un réservoir d'eau sanitaire d'un chauffe-eau traditionnel existant dans le bâtiment, par exemple un chauffe-eau électrique, en reliant la sortie EC du circuit secondaire à l'entrée d'eau froide du réservoir et la sortie d'eau chaude du réservoir à l'entrée EF du circuit secondaire 122.

Dans un autre mode de réalisation, représenté sur la figure 1, les moyens d'extraction comprennent uniquement un détendeur 127, un circuit de fluide amont 124 et un compresseur 125, reliés en série avec le circuit secondaire de la pompe à chaleur pour former un circuit fermé dans lequel circule un fluide, tel que de l'eau ou tout autre fluide frigorigène. Dans une variante, l'eau du réservoir 110 circule directement dans le circuit secondaire. Dans une autre variante, le circuit secondaire est relié à un échangeur de chaleur positionné au plus près de l'eau à chauffer du réservoir 110, soit à l'intérieur du réservoir 110 (un tuyau serpentant à l'intérieur du réservoir par exemple, figure 1) soit à l'extérieur du réservoir (un tube enroulé autour du réservoir 110 par exemple).

Le dispositif de chauffage 210 comprend dans les exemples représentés un réservoir de liquide de chauffage 211 couplé à un élément chauffant tel qu'une chaudière au fuel ou au gaz, une pompe à chaleur, ou encore une combinaison d'une chaudière et d'une pompe à chaleur. Le dispositif de chauffage 210 est adapté pour produire un liquide chaud de chauffage, par exemple de l'eau ou tout autre fluide adapté à transporter de la chaleur. Le circuit de chauffage 220 comprend un ou plusieurs dispositifs échangeurs de chaleur 221, tels que radiateurs, planchers chauffants, ventilo-converteurs, etc, répartis dans l'ensemble des pièces du bâtiment à chauffer.

Dans l'exemple de la figure 1, une entrée du circuit de chauffage est reliée à une sortie 215 de fluide du dispositif de chauffage 210 de la chaudière 300. Chaque échangeur de chaleur est adapté pour échanger une énergie entre l'air ambiant à l'extérieur de l'échangeur de chaleur et le fluide circulant dans le circuit de chauffage. La pompe à chaleur de la chaudière 300 selon l'invention a un circuit primaire dont une entrée est reliée à une sortie du circuit de chauffage 216, et dont une sortie est reliée à une entrée de fluide du dispositif de chauffage 210. Ainsi, le circuit primaire de la pompe à chaleur de la chaudière selon l'invention est raccordé dans l'installation de chauffage, en série avec le circuit de chauffage 210 pour bénéficier de la chaleur fournie par l'installation de chauffage. La pompe à chaleur est raccordée sur le circuit de retour du circuit de chauffage pour ne pas pénaliser le chauffage de l'air du bâtiment.

L'élément essentiel de l'invention est que le fluide circulant dans le circuit primaire de la pompe à chaleur est l'eau chaude du circuit de chauffage rentrant dans la chaudière. En hiver, lorsque le bâtiment est chauffé, le dispositif de chauffage chauffe le liquide circulant dans le circuit de chauffage comprenant les radiateurs, etc., et la pompe à chaleur peut ainsi utiliser comme source froide un liquide à une température de l'ordre de 25 à 40°C pour produire avec un bon rendement une eau chaude sanitaire à une température de l'ordre de 50 à 70°C. En été, le bâtiment n'est pas chauffé et le fluide circulant dans le circuit de chauffage est à la température de l'air ambiant à l'intérieur du bâtiment. La pompe à chaleur peut ainsi utiliser comme source froide un liquide à une température de l'ordre de 15 à 35°C pour produire l'eau chaude sanitaire tout en refroidissant le liquide circulant dans le circuit de chauffage. Le chauffe-eau participe ainsi à la climatisation du bâtiment.

Dans l'exemple de la figure 2, la chaudière selon l'invention comprend également une vanne trois voies 230, dont :
- une entrée 231 est reliée à la sortie de fluide du dispositif de chauffage 210,
- une entrée 232 est reliée à la sortie du circuit primaire 121 du chauffe-eau 100, et
- une sortie 233 est reliée à l'entrée du circuit de chauffage 220.

La vanne trois voies permet :
- soit de raccorder en série le dispositif de chauffage 210 (la chaudière), le circuit de chauffage 220 (les radiateurs, etc.) et le circuit primaire de la pompe à chaleur de la chaudière selon l'invention ; ce mode de fonctionnement est notamment intéressant en hiver.
- soit de raccorder en série le circuit de chauffage et le circuit primaire de la pompe à chaleur de la chaudière et d'exclure le dispositif de chauffage ; ce mode de fonctionnement est notamment intéressant en été, il permet d'éteindre totalement le dispositif de chauffage.

La vanne trois voies peut être actionnée manuellement par l'utilisateur. La vanne trois voies peut aussi être commandée par un moyen de commande 234 pour, en fonction d'une valeur prédéfinie d'un paramètre de sélection, relier sélectivement :
- la sortie du dispositif de chauffage à l'entrée du circuit de chauffage 220, ou
- la sortie du circuit primaire 121 à l'entrée du circuit de chauffage 220.

Le paramètre de sélection peut être la température ambiante, dont la valeur peut être fournie en continu par un thermomètre relié au moyen de commande, ou la valeur moyenne de la température sur une période prédéfinie, ou la date du jour, dont la valeur peut être fournie par une horloge reliée au moyen de commande. Le paramètre de sélection peut encore être une instruction d'un utilisateur, comme par exemple "passer en mode été" pour la commande la plus simple. Bien sûr, une combinaison de plusieurs paramètres de sélection peut être envisageable.

Si nécessaire, l'installation de chauffage peut comprendre également un circulateur 240 adapté à entraîner en mouvement le fluide circulant entre l'entrée et la sortie du circuit de chauffage.

La chaudière selon l'invention peut être installée sur toute installation de chauffage existante comprenant un circuit de chauffage par circulation de fluide, en remplacement d'une chaudière traditionnelle au fuel ou au gaz par exemple.

A titre indicatif pour une chaudière comprenant un réservoir d'eau chaude sanitaire de 250 à 300 litres, une pompe à chaleur consommant 4 KW/heure (soit une puissance électrique consommée relativement faible) est suffisante pour chauffer l'eau du réservoir à une température de l'ordre de 60°C en environ 8H. En effet, comme la température de la source froide est élevée, de l'ordre de 15 à 45°C selon les saisons, le coefficient de performance de la pompe à chaleur est particulièrement élevé, de l'ordre de 4 à 5.

Par ailleurs, avec l'invention, la pompe à chaleur 120 peut être réalisée de manière totalement dissociée du réservoir d'eau 110. Il s'ensuit que le réservoir d'eau du chauffe-eau peut être remplacé sans remplacer les éléments thermodynamiques.

## Revendications

1. Chaudière (300) comprenant un dispositif de chauffage (210) adapté pour produire un fluide chaud de chauffage sur une sortie (215) de la chaudière adaptée à être reliée à une entrée d'un circuit de chauffage (220) comprenant au moins un dispositif échangeur (221) de chaleur tel qu'un radiateur ou un plancher chauffant, et une pompe à chaleur (120) de type liquide / fluide, comprenant :
• un circuit primaire (121) dont une sortie est reliée à une entrée de fluide du dispositif de chauffage (210) et dont une entrée forme une entrée (216) de fluide adaptée à être reliée à une sortie de retour du circuit de chauffage (220), et
• un circuit secondaire dont une sortie et une entrée de fluide sont adaptées à être reliées respectivement à une entrée et une sortie de fluide d'un ballon d'eau chaude sanitaire, le circuit primaire et le circuit secondaire étant couplés thermiquement de sorte que le circuit primaire transmette de l'énergie au circuit secondaire, chaudière **caractérisée en ce qu'**elle comprend la pompe à chaleur (120), et **en ce que** l'entrée du circuit primaire (216) forme une entrée de fluide de la chaudière.

2. Chaudière selon la revendication précédente, comprenant également un réservoir (110) d'eau sanitaire, la sortie et l'entrée de fluide du circuit secondaires étant reliées respectivement à l'entrée et la sortie de fluide du réservoir (110) d'eau chaude sanitaire de sorte à transmettre l'énergie du fluide circulant dans le circuit secondaire à l'eau sanitaire du réservoir (110).

3. Chaudière selon la revendication 2, dans laquelle la pompe à chaleur comprend également des moyens (123) pour extraire de l'énergie du liquide circulant dans le circuit primaire et transmettre l'énergie extraite au fluide circulant dans le circuit secondaire.

4. Chaudière selon la revendication 2, dans laquelle les moyens d'extraction (123) comprennent :
• un circuit de fluide amont (124) adapté pour que le fluide circulant dans le circuit primaire échange de l'énergie avec le fluide circulant dans le circuit amont, le circuit primaire et le circuit amont formant ensemble un évaporateur
• un compresseur (125) adapté à comprimer le fluide du circuit amont,
• un circuit de fluide aval (126) adapté pour que le fluide comprimé échange de l'énergie avec le fluide circulant dans le circuit secondaire, le circuit aval et le circuit secondaire formant ensemble un condenseur,
• un détendeur (127) pour détendre le fluide reçu du circuit aval et transmettre le fluide détendu au circuit amont.

5. Chaudière selon la revendication 3, dans laquelle les moyens d'extraction (123) comprennent :
• un circuit de fluide amont (124) adapté pour que le fluide circulant dans le circuit primaire échange de l'énergie avec le fluide circulant dans le circuit amont,
• un compresseur (125) adapté à comprimer le fluide du circuit amont et à fournir le fluide comprimé au circuit secondaire (122) de la pompe à chaleur (120),
• un détendeur (127) pour détendre le fluide reçu du circuit secondaire et transmettre le fluide détendu au circuit amont.

6. Chaudière selon l'une des revendications précédentes, comprenant également une vanne trois voies (230) dont :
• une première entrée est reliée à la sortie du circuit primaire (121) de la pompe à chaleur (120),
• une deuxième entrée est reliée à la sortie du dispositif de chauffage (210),
• une sortie forme la sortie (215) de la chaudière.

7. Chaudière selon la revendication précédente, comprenant également un moyen de commande (234) de la vanne trois voies (230) pour, en fonction d'une valeur prédéfinie d'un paramètre de sélection telle qu'une température ambiante ou une instruction d'un utilisateur, relier sélectivement :
• la sortie du dispositif de chauffage à l'entrée du circuit de chauffage (220), ou
• la sortie du circuit primaire (121) à l'entrée du circuit de chauffage (220).

8. Chaudière selon l'une des revendications précédentes, dans laquelle le dispositif de chauffage (210) comprend un réservoir d'eau de chauffage (211) dont une entrée et une sortie forment respectivement l'entrée et la sortie du dispositif de chauffage (210), et un élément chauffant (212) pour chauffer le liquide du réservoir d'eau de chauffage, ledit élément chauffant étant :
• une pompe à chaleur (214) apte à produire de l'énergie à partir de l'eau, de l'air, d'un sol, ou
• un bruleur (213) apte à produire de l'énergie à partir de bois, de charbon, de fuel, etc., ou
• une combinaison d'un bruleur et d'une pompe à chaleur.

9. Installation de chauffage pour un bâtiment, comprenant un circuit de chauffage (220) comprenant un ou plusieurs dispositifs échangeurs de chaleur (221), et une chaudière selon l'une des revendications précédentes, dont une sortie (215) et une entrée (216) sont reliées respectivement à une sortie et une entrée du circuit de chauffage.

## Patentansprüche

1. Heizkessel (300), umfassend eine Heizvorrichtung (210), die geeignet ist, um ein warmes Fluid an einem Auslass (215) des Heizkessels zu erzeugen, der geeignet ist, um an einen Einlass eines Heizkreises (220) angeschlossen zu werden, der mindestens eine Wärmeaustauschvorrichtung (221), wie einen Radiator oder eine Fußbodenheizung, und eine Wärmepumpe (120) der Art Flüssigkeit/Fluid umfasst, umfassend:
• einem Primärkreis (121), von dem ein Auslass mit einem Fluideinlass der Heizvorrichtung (210) verbunden ist und ein Einlass einen Fluideinlass (216) bildet, der geeignet ist, um mit einem Rücklaufauslass des Heizkreises verbunden zu werden (220), und
• einen Sekundärkreis, von dem ein Fluidauslass und ein Fluideinlass geeignet sind, um jeweils an einen Fluideinlass und einen Fluidauslass eines Brauch-Warmwasserspeichers angeschlossen zu werden, wobei der Primärkreis und der Sekundärkreis thermisch so gekoppelt sind, dass der Primärkreis Energie an den Sekundärkreis überträgt,
**dadurch gekennzeichnet, dass** der Heizkessel die Wärmepumpe (120) umfasst, und dass der Einlass des Primärkreises (216) einen Fluideinlass des Heizkessels bildet.

2. Heizkessel nach dem vorangehenden Anspruch, umfassend ebenfalls einen Brauchwasserbehälter (110), wobei der Fluidauslass und der Fluideinlass des Sekundärkreises jeweils mit dem Fluideinlass und dem Fluidauslass so mit dem Brauch-Warmwasserbehälter (110) verbunden ist, dass die Energie des in dem Sekundärkreis strömenden Fluids an das Brauchwasser in dem Behälter (110) übertragen wird.

3. Heizkessel nach Anspruch 2, bei dem die Wärmepumpe ebenfalls Mittel (123) umfasst, um Energie aus der im Primärkreis strömenden Flüssigkeit zu Extrahieren und die der im Sekundärkreis strömenden Flüssigkeit entzogene Energie zu übertragen.

4. Heizkessel nach Anspruch 2, bei dem die Extraktionsmittel (123) Folgendes umfassen:
• einen stromaufwärtsen Fluidkreis (124), der so angepasst ist, dass das in der Primärkreis strömende Fluid mit dem in dem stromaufwärtsen Kreis strömenden Fluid Energie austauscht, wobei der Primärkreis und der stromaufwärtse Kreis zusammen einen Verdampfer bilden,
• einen Kompressor (125), der geeignet ist, um das Fluid des stromaufwärtsen Kreises zu komprimieren,
• einen stromabwärtsen Fluidkreis (126), der so angepasst ist, dass das komprimierte Fluid mit dem in dem Sekundärkreis strömenden Fluid Energie austauscht, wobei der stromabwärtse Kreis und der Sekundärkreis zusammen einen Kondensator bilden,
• ein Expansionsventil (127) zum Expandieren des von dem stromabwärtsen Kreis empfangen Fluids und zum Übertragen des expandierten Fluids an den stromaufwärtsen Kreis.

5. Heizkessel nach Anspruch 3, bei dem die Extraktionsmittel (123) Folgendes umfassen:
• einen stromaufwärtsen Fluidkreis (124), der so angepasst ist, dass das in dem Primärkreis strömende Fluid mit dem in dem stromaufwärtsen Kreis strömenden Fluid Energie austauscht,
• einem Kompressor (125), der geeignet ist, um das Fluid in dem stromabwärtse Kreis zu komprimieren und das komprimierte Fluid an den Sekundärkreis (122) der Wärmepumpe (120) zu liefern,
• ein Expansionsventil (127) zum Expandieren des von dem Sekundärkreis empfangen Fluids und zum Übertragen des expandierten Fluids an den stromaufwärtsen Kreis.

6. Heizkessel nach einem der vorhergehenden Ansprüche, umfassend ebenfalls ein Dreiwegeventil (230), von dem:
• ein erster Einlass mit dem Auslass des Primärkreises (121) der Wärmepumpe (120) verbunden ist,
• ein zweiter Einlass mit dem Auslass der Heizungsvorrichtung (210) verbunden ist,
• ein Auslass den Auslass (215) des Heizkessels bildet.

7. Heizkessel nach dem vorhergehenden Anspruch, umfassend ebenfalls ein Mittel zum Steuern (234) des Dreiwegeventils (230), um basierend auf einem vorbestimmten Wert eines Auswahlparameters, wie einer Raumtemperatur oder eines Befehls eines Benutzers, selektiv:
• den Auslass der Heizungsvorrichtung mit dem Einlass des Heizkreises (220), oder
• den Auslass des Primärkreises (121) mit dem Einlass des Heizkreises (220) zu verbinden.

8. Heizkessel nach einem der vorhergehenden Ansprüche, bei dem die Heizungsvorrichtung (210) einen Heizungswasserbehälter (211), von dem ein Einlass und ein Auslass jeweils den Einlass und den Auslass der Heizungsvorrichtung bilden (210), und ein Heizelement (212) zum Erwärmen der Flüssigkeit in der Heizungswasserbehälter umfasst, wobei das besagte Heizelement:
• eine Wärmepumpe (214), die geeignet ist, Energie aus dem Wasser, der Luft, einem Boden zu erzeugen, oder
• ein Brenner (213), der geeignet ist, Energie aus Holz, Kohle, Heizöl, usw. zu erzeugen, oder
• eine Kombination aus einem Brenner und einer Wärmepumpe ist.

9. Heizungsanlage für ein Gebäude, umfassend einen Heizkreis (220), der eine oder mehrere Wärmeaustauschvorrichtungen (221) umfasst, und einen Heizkessel nach einem der vorhergehenden Ansprüche, von dem ein Auslass (215) und ein Einlass (216) jeweils mit einem Einlass und einem Auslass des Heizkreises verbunden sind.

## Claims

1. Boiler (300) comprising a heating device (210) adapted for producing a hot heating fluid at an outlet (215) of the boiler adapted for being connected to an inlet of a heating circuit (220) comprising at least one heat-exchanging device (221) such as a radiator or underfloor heating and a heat pump (120) of the liquid/fluid type, comprising:
• a primary circuit (121), an outlet of which is connected to a fluid inlet of the heating device (210) and an inlet of which forms a fluid inlet (216) adapted for being connected to a return outlet of the heating circuit (220), and
• a secondary circuit, a fluid outlet and a fluid inlet of which are adapted for being connected to a fluid inlet and a fluid outlet, respectively, of a secondary hot water tank, the primary circuit and the secondary circuit being thermally coupled so that the primary circuit transmits energy to the secondary circuit,
wherein the boiler comprises the heat pump (120), and wherein the inlet of the primary circuit (216) forms a fluid inlet of the boiler.

2. Boiler according to the preceding claim, comprising also a secondary water tank (110), the fluid outlet and the fluid inlet of the secondary circuit being connected to the fluid inlet and the fluid outlet, respectively, of the sanitary hot water tank (110) so as to transmit the energy of the fluid flowing in the secondary circuit to the secondary water tank (110).

3. Boiler according to claim 2, wherein the heat pump also includes means (123) for extracting energy of the liquid flowing in the primary circuit and for transmitting the extracted energy to the fluid flowing in the secondary circuit.

4. Boiler according to claim 2, wherein the extraction means (123) comprise:
• an upstream fluid circuit (124) adapted so that the fluid flowing in the primary circuit exchanges energy with the fluid flowing in the upstream circuit, the primary circuit and the upstream circuit forming together an evaporator,
• a compressor (125) adapted for compressing the fluid of the upstream circuit,
• a downstream fluid circuit (126) adapted so that the compressed fluid exchanges energy with the fluid flowing in the secondary circuit, the downstream circuit and the secondary circuit forming together a condenser,
• an expansion device (127) for expanding the fluid received from the downstream circuit and for transmitting the expanded fluid to the upstream circuit.

5. Boiler according to claim 3, wherein the extraction means (123) comprise:
• an upstream fluid circuit (124) adapted so that the fluid flowing in the primary circuit exchanges energy with the fluid circulating in thee upstream circuit,
• a compressor (125) adapted for compressing the fluid of the upstream circuit and for supplying the compressed fluid to the secondary circuit (122) of the heat pump (120),
• an expansion device (127) for expanding the fluid received from the secondary circuit and for transmitting the expanded fluid to the upstream circuit.

6. Boiler according to any of the preceding claims, comprising also a three-way valve (230), of which:
• a first inlet is connected to the outlet of the primary circuit (121) of the heat pump (120),
• a second inlet is connected to the outlet of the heating device (210),
• an outlet forms the outlet (215) of the boiler.

7. Boiler according to the preceding claim, comprising also a means (234) for controlling the three-way valve (230) for selectively connecting, based on a predefined value of a selection parameter such as a room temperature or an instruction by a user:
• the outlet of the heating device to the inlet of the heating circuit (220), or
• the outlet of the primary circuit (121) to the inlet of the heating circuit (220).

8. Boiler according to one of the preceding claims, wherein the heating device (210) comprises a heating water tank (211), an inlet and an outlet of which form the inlet and the outlet, respectively, of the heating device (210), and a heating element (212) for heating the liquid in the heating water tank, said heating element being:
• a heat pump (214) capable of producing energy from the water, the air, a floor, or
• a burner (213) capable of producing energy from wood, coal, fuel oil, etc., or
• a combination of a burner and a heat pump.

9. Facility for heating a building, comprising a heating circuit (220) comprising one or more heat-exchanging devices (221), and a boiler according to one of the preceding claims, an outlet (215) and an inlet (216) of which are connected to an inlet and an outlet, respectively, of the heating circuit.
